# EUROPEAN PATENT APPLICATION

(11) **EP 4 761 217 A1**
(43) Date of publication of application: **17.06.2026**
(21) Application number: 25192144.1
(22) Date of filing: 28.07.2025
(51) Int. Cl.: H04L 67/1095, G06F 9/54, G06F 16/27

(54) **MESSAGE PROCESSING METHOD BASED ON MESSAGE QUEUE SYSTEM, ELECTRONIC DEVICE, AND STORAGE MEDIUM**

(30) Priority: 13.12.2024 CN 202411845509
(71) Applicant: Beijing Volcano Engine Technology Co., Ltd., Beijing 100190 (CN)
(72) Inventor: ZOU, Shengfu, Beijing 100028 (CN); ZHANG, Siqi, Beijing 100028 (CN); YANG, Guodong, Beijing 100028 (CN); WANG, Xiaofan, Beijing 100028 (CN); ZHANG, Yinghui, Beijing 100028 (CN); LEI, Liyuan, Beijing 100028 (CN); GONG, Yunfei, Beijing 100028 (CN); GAO, Changi, Beijing 100028 (CN)
(74) Representative: Marks & Clerk LLP

(57) **Abstract**

The present application provides a message processing method based on a message queue system, an electronic device, and a storage medium. The method includes: receiving a first message generated in a business service, and writing, in the first message, a first storage offset configured for the first message, wherein a storage offset in a first message queue increases with message storage; and storing, in a first message queue cluster, the first message that carries the first storage offset, and synchronously storing, in a second message queue cluster, the first message in the first message queue cluster through a dedicated data synchronization service, wherein the second message queue cluster is configured to store the first message according to the first storage offset, and the second message queue cluster supports message backup of the first message queue cluster.

## Description

### CROSS-REFERENCE TO RELATED APPLICATION

This application claims priority to Chinese Patent Application No. 2024118455096, filed on December 13, 2024, which is incorporated herein by reference in its entirety as a part of this application.

### TECHNICAL FIELD

The present application relates to the field of data processing technologies, and in particular, to a message processing method based on a message queue system, an electronic device, and a storage medium.

### BACKGROUND

A message queue system (such as Kafka or RocketMQ) is configured to perform message-related processing, such as message storage and message forwarding. After a Topic has been configured in the system, the system works as follows: after receiving a message provided by a Producer, the Topic saves the message, and the Topic delivers the message to a Consumer that subscribes to the Topic.

In addition, to improve a service effect, the message queue system has a requirement for disaster recovery across regions. Disaster recovery across regions refers to building one or more sets of identical applications or services (such as a message queue system) in computer rooms deployed in different regions, to take over immediately after a disaster, so that an impact of a failure (such as a network interruption, a computer room fire, or a computer room power outage) of a single computer room on an overall service may be reduced.

### SUMMARY

To meet the above requirements, the present application provides a message processing method based on a message queue system, an electronic device, and a storage medium.

To achieve the above objective, the present application provides the following technical solutions:

The present application provides a message processing method based on a message queue system. The method includes: receiving a first message generated in a business service, and writing, in the first message, a first storage offset configured for the first message, where a storage offset in a first message queue increases with message storage; and storing, in a first message queue cluster, the first message that carries the first storage offset, and synchronously storing, in a second message queue cluster, the first message in the first message queue cluster through a dedicated data synchronization service, where the second message queue cluster is configured to store the first message according to the first storage offset, and the second message queue cluster supports message backup of the first message queue cluster.

In a possible implementation, the first message queue cluster and the second message queue cluster are deployed across regions, and the dedicated data synchronization service is preconfigured between the first message queue cluster and the second message queue cluster, and is used to unidirectionally send the first message in the first message queue cluster to the second message queue cluster.

In a possible implementation, each of the first message queue cluster and the second message queue cluster includes a plurality of containers created through configuration of a same topic, the plurality of containers include a first container and a second container, and the topic is used to indicate a message category stored in the plurality of containers; and the dedicated data synchronization service configured between the first container in the first message queue cluster and the first container in the second message queue cluster is used to unidirectionally synchronize, to the second message queue cluster, a message received and stored by the first message queue from the business service; and the dedicated data synchronization service configured between the second container in the first message queue cluster and the second container in the second message queue cluster is used to unidirectionally synchronize, to the first message queue cluster, a message received and stored by the second message queue from the business service.

In a possible implementation, the writing, in the first message, a first storage offset configured for the first message includes: writing, in a message header of the first message, the first storage offset configured for the first message; or writing, in an attribute feature of the first message, the first message offset configured for the first message.

In a possible implementation, the method further includes: after obtaining the first storage offset of the first message, determining, by the second message queue cluster, whether the first storage offset is greater than a largest storage offset in the second message queue cluster; if yes, storing, in the second message queue cluster, the first message according to the first storage offset; if no, discarding the first message.

In a possible implementation, the receiving a first message generated in a business service includes: receiving the first message generated in the business service corresponding to the first message queue cluster; and the method further includes: receiving a second message generated in a business service corresponding to the second message queue cluster, and writing, in the second message, a second storage offset configured for the second message, where a storage offset in a second message queue increases with message storage; and storing, in the second message queue cluster, the second message that carries the second storage offset, and updating the second storage offset of the second message to metadata, where the metadata is configured to support the first message queue cluster to read the second storage offset of the second message and synchronously store, in the first message queue cluster, the second message in the second message queue cluster through the dedicated data synchronization service.

In a possible implementation, the method further includes: obtaining first consumption information generated via the first message queue cluster, where the first consumption information is used to indicate a message consumed via the first message queue cluster; a third container and a fourth container are configured in the first message queue cluster, and the fourth container is configured as a shadow container of the third container, and is used to cache some messages updated in the third container; storing the first consumption information in the third container in the first message queue cluster; and in response to the first consumption information meeting a preset synchronization condition, storing the first consumption information in the fourth container in the first message queue cluster, and synchronously storing, in the second message queue cluster, the first consumption information in the fourth container through the dedicated data synchronization service.

In a possible implementation, the method further includes: responding to a message consumption request through the first message queue cluster deployed in a first region, where the first message queue cluster supports consumption of a message generated by the business service corresponding to each region.

In a possible implementation, the method further includes: receiving a message consumption request for a specified topic, where the message consumption request is used to request consumption of a message stored in a message queue cluster deployed in any one of a plurality of regions; and responding to the message consumption request through a specified message queue cluster, where topics with a same name in different regions support message consumption from the message queue cluster deployed in any one of the plurality of regions, and the topics are used to indicate a message category stored in the message queue cluster.

The present application provides a message processing apparatus based on a message queue system. The apparatus includes: a first receiving unit, configured to receive a first message generated in a service, and write, in the first message, a first storage offset configured for the first message, where a storage offset in a first message queue increases with message storage; and a first storage unit, configured to store, in a first message queue cluster, the first message that carries the first storage offset, and synchronously store, in a second message queue cluster, the first message in the first message queue cluster through a dedicated data synchronization service, where the second message queue cluster is configured to store the first message according to the first storage offset, and the second message queue cluster supports message backup of the first message queue cluster.

The present application provides an electronic device. The electronic device includes: a processor and a memory, where the memory is configured to store an instruction or a computer program; and the processor is configured to execute the instruction or the computer program in the memory, to enable the electronic device to perform the message processing method based on a message queue system provided in the present application.

The present application provides a computer-readable medium. The computer-readable medium stores an instruction or a computer program that, when running on a device, enables the device to perform the message processing method based on a message queue system provided in the present application.

The present application provides a computer program product. The computer program product includes a computer program carried in a non-transitory computer-readable medium, and the computer program includes program code for performing the message processing method based on a message queue system provided in the present application.

### BRIEF DESCRIPTION OF DRAWINGS

To describe the technical solutions in the embodiments of the present application or in the related art more clearly, the following briefly introduces drawings required for describing the embodiments or the related art. Apparently, the drawings in the following description show merely some embodiments of the present application, and a person of ordinary skill in the art may still derive other drawings from these drawings without creative efforts.
Fig. 1 is a flowchart of a message processing method based on a message queue system according to an embodiment of the present application;
Fig. 2 is a schematic diagram of a configuration result of a same topic configured for a plurality of regions according to an embodiment of the present application;
Fig. 3 is a schematic diagram of another configuration result of a same topic configured for a plurality of regions according to an embodiment of the present application;
Fig. 4 is a schematic diagram of a message synchronization process between a plurality of regions according to an embodiment of the present application;
Fig. 5 is a schematic diagram of a synchronization process of consumption information between a plurality of regions according to an embodiment of the present application;
Fig. 6 is a schematic diagram of a structure of a message processing apparatus based on a message queue system according to an embodiment of the present application; and
Fig. 7 is a schematic diagram of a structure of an electronic device according to an embodiment of the present application.

### DETAILED DESCRIPTION

To better understand the technical solutions provided in the present application, the following describes some technical nouns.

Kafka is a high-throughput, distributed, and scalable message middleware system. In addition, Kafka may process a large amount of real-time data streams and is widely used in scenarios such as log collection, event processing, stream processing, and message queues. In addition, the architecture of Kafka includes components such as a Producer, a Consumer, and a Broker. The Producer may send a message to a Kafka cluster, the Consumer may subscribe to and process a message from the Kafka cluster, and the Broker is a message relay server responsible for storing and forwarding the message.

A Topic refers to a logical container of messages, also referred to as a message queue set, which is used to classify and store messages. In Kafka, a message is published to a specified Topic, and may be subscribed to by one or more Consumers. A Topic is one of the core concepts of Kafka and is a basis for implementing message delivery. It may be learned that one Topic is used to store messages of the same type. For example, TopicA is used to store order messages of a restaurant, and TopicB is used to store transaction messages of a store.

A Partition is a mechanism for implementing data sharding in Kafka. One Topic may be divided into a plurality of Partitions, and each Partition is an ordered message queue. When a message is sent to a Topic, a hash calculation is performed on the message based on a specified key, and then the message is allocated to a corresponding Partition.

A Producer refers to a producer of messages, which is configured to send messages to a specified Topic. The Producer is responsible for sending a message to a Broker node in a Kafka cluster, and may specify a key of the message when sending the message, so that Kafka allocates the message to a specified Partition.

A Consumer is a consumer of messages, which is configured to receive messages from a specified Topic. The Consumer is responsible for obtaining a message from a Broker node in a Kafka cluster, and may specify from which Partition the message is obtained. The consumer may consume messages in different ways, for example, batch consumption and polling consumption.

A Broker is a node in a Kafka cluster and is configured to store and manage messages. The Broker is one of the core components of Kafka and is responsible for receiving and processing a message sent by a producer, storing the message into a disk, and forwarding the message to a consumer.

An offset is an identification used to identify a location of each message in a partition. Each partition has a unique offset value, and a consumer may obtain a message at a specified location based on the offset. Kafka further provides a special topic, named _consumer_offset, which is used to store consumption information of the consumer.

It is found through research that the foregoing requirement for disaster recovery across regions may be implemented in a synchronous replication manner, and an implementation process is as follows: while a message is written into a local message queue, the message is also synchronously written into each remote message queue (or computer room), so that these remote message queues store a copy of the message, so that after it is determined that all remote copies are successfully written, it may be determined that a current message is successfully written.

It is further found through research that the solution in the foregoing paragraph has the following defects: the network delay of a remote computer room is uncontrollable, resulting in high message write delay, which affects the disaster recovery effect across regions. In addition, due to features of the solution, the solution allows a message to be written into a message queue in only one region at the same time. For example, at a specific moment, if a producer sends a message to a message queue in region 1, producers in other regions cannot send messages to message queues in corresponding regions (for example, a producer in region 2 cannot send a message to a message queue in region 2, and so on), so that the producers in the other regions may send messages only after it is determined that the foregoing message has been successfully written, which affects message write experience.

It is further found through research that, to improve write efficiency, the foregoing requirement for disaster recovery across regions may be implemented in an asynchronous replication manner, and an implementation process is as follows: after a message is written into a local message queue, it may be considered that a current message is successfully written, so that after a specific delay, the message is asynchronously replicated to each remote message queue (or computer room) for data redundancy.

It is further found through research that the solution in the foregoing paragraph has the following defect: each message in a cluster corresponds to a unique offset, and the offset is increased every time a write is performed, which may cause offsets corresponding to a same message to be different in different clusters (the offset may change in scenarios such as a sending failure, a retry, and a cluster failure), resulting in a defect of offset misalignment in the clusters deployed in different regions.

It is further found through research that a solution (such as a Kafka replica synchronization solution from Uber) to the defect in the foregoing paragraph is as follows: after a message is replicated from cluster 1 to cluster 2, an offset in cluster 1 is mapped to an offset in cluster 2, so that disaster recovery across regions may be implemented based on the mapping subsequently. In addition, another solution (such as a remote computer room replication mechanism solution from Confluent and a remote replication solution from RocketMQ) to the defect in the foregoing paragraph is as follows: a message sent from cluster 1 to cluster 2 carries header information of the message, and the header information records a Time stamp at which the message is generated, so that a correspondence between offsets in different clusters may be determined based on the time stamp subsequently. It may be learned that in this solution, although it cannot be ensured that offsets of a same message in two clusters are equal, it may be ensured that time stamp information carried by the message is equal. Therefore, when a failure occurs and a cluster switch is performed, a corresponding offset in a new cluster may be found by querying a time stamp, to implement disaster recovery across regions.

It is further found through research that both solutions shown in the foregoing paragraph need to rely on a complex mechanism to ensure that the same message in two remote clusters may be mapped to each other, causing the two solutions to have respective defects. For example, the solution implemented by offset mapping requires an additional third-party application to store an offset mapping relationship, which affects the effect of disaster recovery across regions. For another example, in the solution implemented by time stamp mapping, when there are a plurality of pieces of data at the same time stamp, a consumption site cannot be accurately found, and there may be duplicate data. In addition, a switch solution requires a query, which is relatively complex, and affects the effect of the disaster recovery across regions.

Based on the foregoing research, to better overcome the defects shown in the foregoing paragraph, the present application provides a multi-region disaster recovery solution across regions implemented in a specified offset writing manner. The solution includes: after writing a message into cluster 1, sending the message and an offset corresponding to the message in cluster 1 to cluster 2, so that cluster 2 may perform write processing on the message according to the offset, thereby making an offset corresponding to the message in cluster 2 the same as the offset corresponding to the message in cluster 1, and thus making offsets corresponding to the same message in different clusters equal. This may effectively overcome a defect caused by the inconsistency of offsets corresponding to the same message in different clusters, which is favorable for improving the effect of disaster recovery across regions.

For example, when the disaster recovery solution across regions provided in the present application involves N clusters, these clusters may meet the following constraints: The same topic is configured in each of the clusters, so that these clusters may all receive a message sent for the topic; the different clusters are deployed in different regions, so that the clusters back up each other; and for an ith cluster, after receiving a message sent for the topic, the ith cluster not only needs to store the message into the ith cluster, but also needs to synchronize the message and an offset corresponding to the message in the ith cluster to each of the other clusters other than the ith cluster in the N clusters, so that each of the other clusters may store the message according to the offset, thereby enabling a same message to be in an offset alignment state in the different clusters, which is favorable for improving a disaster recovery effect across regions. i is a positive integer, i ≤ N, and N is a positive integer.

To enable persons skilled in the art to better understand the solutions of the present application, the following clearly and completely describes the technical solutions in the embodiments of the present application with reference to the drawings in the embodiments of the present application. Apparently, the described embodiments are merely some rather than all of the embodiments of the present application. All other embodiments obtained by a person of ordinary skill in the art based on the embodiments of the present application without creative efforts shall fall within the protection scope of the present application.

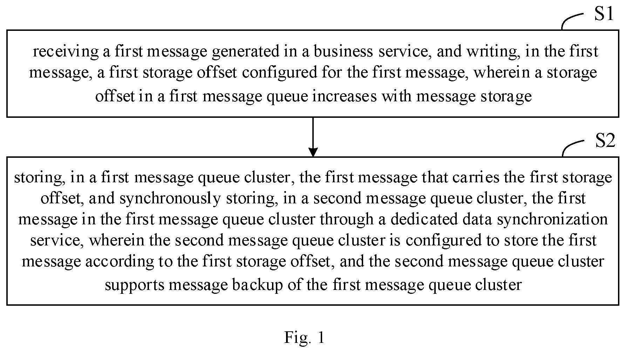

To better understand the technical solutions provided in the present application, the following first describes, with reference to some drawings, the message processing method based on a message queue system provided in the present application. As shown in Fig. 1, the message processing method based on a message queue system provided in this embodiment of the present application includes the following steps S1 and S2.

S1: receiving a first message generated in a business service, and writing, in the first message, a first storage offset configured for the first message, where a storage offset in a first message queue increases with message storage.

The business service refers to a service configured to generate a message, for example, a Producer.

The first message refers to a message generated by the business service for the first message queue cluster, in the hope that the first message queue cluster stores the message and synchronizes the message to another message queue cluster.

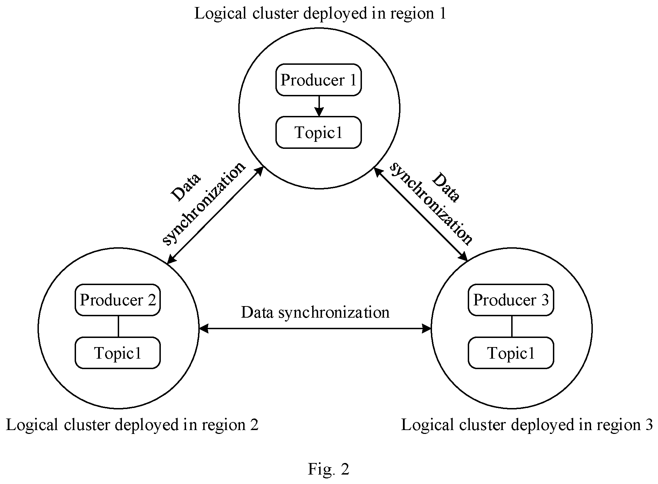

The first message queue cluster refers to a message queue cluster deployed in a first region, for example, the ith cluster or the logical cluster deployed in region 1, shown in Fig. 2, so that the cluster may be at least configured to store a message generated by the business service corresponding to the region.

The first storage offset is used to describe a storage location of the first message. The present application does not limit an implementation of the first storage offset. For example, the first storage offset may be implemented by an offset.

S2: storing, in a first message queue cluster, the first message that carries the first storage offset, and synchronously storing, in a second message queue cluster, the first message in the first message queue cluster through a dedicated data synchronization service, where the second message queue cluster is configured to store the first message according to the first storage offset, and the second message queue cluster supports message backup of the first message queue cluster.

The dedicated data synchronization service is used to implement data synchronization between different message queue clusters.

The second message queue cluster refers to a cluster different from the first message queue cluster, for example, each of the other clusters other than the ith cluster in the N clusters, the logical cluster deployed in region 2 shown in Fig. 2, or the logical cluster deployed in region 3 shown in Fig. 2, so that the second message queue cluster is at least configured to back up the message stored in the first message queue cluster.

It may be learned from the foregoing steps S1 and S2 that the present application provides a multi-region disaster recovery solution across regions implemented in a specified offset writing manner. The solution includes: after a message is written into cluster 1, synchronizing the message and an offset corresponding to the message in cluster 1 to cluster 2, so that cluster 2 may perform write processing on the message according to the offset, thereby making an offset corresponding to the message in cluster 2 the same as the offset corresponding to the message in cluster 1, and thus making offsets corresponding to a same message in different clusters equal. This may effectively overcome a defect caused by inconsistency of offsets corresponding to the same message in different clusters, which is favorable for improving a disaster recovery effect across regions.

It is found through research that a deployment topology of message queues may be subdivided into two concepts: a plurality of regions (Region) and a plurality of data centers (Internet data centers, Idc). The plurality of data centers mean that there are a plurality of physical clusters that are close to each other in a physical region (any region shown in Fig. 2 or a country), and these physical clusters may be connected through a relatively low-cost network dedicated line, so that these physical clusters may form a logical cluster for use as a cluster deployed in the physical region. In addition, the present application does not limit the plurality of regions. For example, the plurality of regions may mean a plurality of countries or regions, so that the plurality of regions have a feature of a relatively long physical distance, thereby making the deployment topology of the plurality of regions more applicable to the disaster recovery solution across regions provided in the present application, to save costs.

It may be learned that in a possible implementation, the first message queue cluster and the second message queue cluster are deployed across regions, and the dedicated data synchronization service is preconfigured between the first message queue cluster and the second message queue cluster, so that data synchronization between the two clusters may be implemented subsequently with the dedicated data synchronization service, so that the deployment topology of the plurality of regions may be implemented at a relatively low cost.

In addition, in some scenarios, a message queue cluster deployed in a different region may be configured with a corresponding business service, so that the message queue cluster deployed in the region may store a message generated by the corresponding business service, and synchronize the message to a message queue cluster deployed in another region for backup.

It may be learned that in a possible implementation, the foregoing message processing method based on a message queue system may include the following steps 11 to 14.

Step 11: receiving a first message generated in a business service corresponding to a first message queue cluster, and writing, in the first message, a first storage offset configured for the first message, where a storage offset in a first message queue increases with message storage.

The business service corresponding to the first message queue cluster is configured to produce a message and provide the message to the cluster for storage and forwarding.

Step 12: storing, in the first message queue cluster, the first message that carries the first storage offset, and synchronously storing, in a second message queue cluster, the first message in the first message queue cluster through a dedicated data synchronization service, where the second message queue cluster is configured to store the first message according to the first storage offset, and the second message queue cluster supports message backup of the first message queue cluster.

Step 13: receiving a second message generated in a service corresponding to the second message queue cluster, and writing, in the second message, a second storage offset configured for the second message, where a storage offset in a second message queue increases with message storage.

The business service corresponding to the second message queue cluster is configured to produce a message and provide the message to the cluster for storage and forwarding.

The second message refers to a message generated by the business service for the second message queue cluster, in the hope that the second message queue cluster stores the message and synchronizes the message to another message queue cluster.

The second storage offset is used to describe a storage location of the second message. The present application does not limit the implementation of the second storage offset. For example, the second storage offset may be implemented by an offset.

Step 14: storing, in the second message queue cluster, the second message that carries the second storage offset, and synchronously storing, in the first message queue cluster, the second message in the second message queue cluster through the dedicated data synchronization service, where the first message queue cluster supports message backup of the second message queue cluster.

It may be learned from the foregoing steps 11 to 14 that in the multi-region disaster recovery solution across regions based on asynchronous replication provided in the present application, when message queue clusters are deployed in a plurality of regions (such as transoceanic regions), for a message queue cluster deployed in any one of the regions, after the cluster receives a message generated by a producer corresponding to the cluster, the message is first stored in the cluster according to an offset configured for the message, and then the offset and the message are both synchronized to message queue clusters deployed in other regions, so that the message queue clusters deployed in the other regions may all store the message according to the offset, thereby ensuring, in the specified offset writing manner, that storage locations of the message in different clusters are consistent. In this way, the message queue clusters deployed in the different regions may back up each other, to ensure that producers in each region may write messages to the same topic at the same time or at different times, thereby implementing masterless multi-write.

It is found through research that for cluster 1 and cluster 2 that back up each other, after cluster 2 receives a message synchronized by cluster 1, cluster 2 may synchronize the message back to cluster 1, causing a loop problem. To overcome this problem, the present application provides a solution. In this solution, when the first message queue cluster and the second message queue cluster are deployed across regions, and a plurality of dedicated data synchronization services are preconfigured between the first message queue cluster and the second message queue cluster, one dedicated data synchronization **service** is used to unidirectionally send the first message in the first message queue cluster to the second message queue cluster, and another dedicated data synchronization service is used to unidirectionally send the second message in the second message queue cluster to the first message queue cluster. In this way, the loop problem may be overcome in a unidirectional data synchronization manner.

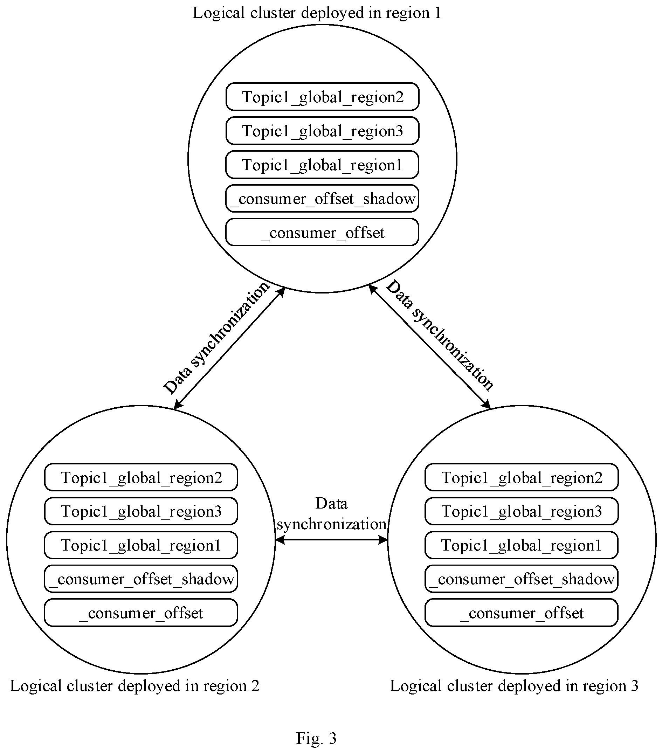

In addition, to better implement disaster recovery across regions in the specified offset writing manner, the present application provides a deployment manner (the deployment manner shown in Fig. 3) of a plurality of message queue clusters involved in the disaster recovery solution. Specifically, for the plurality of message queue clusters configured with the same topic (Topic1 shown in Fig. 3), each message queue cluster includes a plurality of containers created by configuring the topic, so that messages stored in the plurality of containers belong to a category specified by the topic. In addition, a dedicated data synchronization service (Mirror Service) is configured between the same type of container (for example, containers having the same name) in different message queue clusters, so that data synchronization between the different message queue clusters may be completed subsequently with the mirror service.

It should be noted that the mirror service is used to implement data synchronization based on asynchronous replication, and the mirror service may deliver a message stored in an upstream cluster and an offset corresponding to the message to a downstream cluster, so that the downstream cluster stores the message according to the offset, thereby ensuring that offsets of the same message in a source cluster and a target cluster are consistent. In addition, because there is relatively high latency across regions, an independently deployed mirror service may be used for data synchronization. In addition, the quantity of containers in the foregoing "plurality of containers" is determined based on a quantity of clusters in the foregoing "plurality of clusters", so that the "plurality of containers" at least include a container corresponding to each region to which each cluster belongs under the same topic. In addition, the plurality of clusters meet the following constraints: ① Clusters deployed in different regions have different physical names, so that the different clusters may be distinguished subsequently by the physical names, and the containers corresponding to the respective regions under the same topic may be distinguished by using the physical names as suffixes. ② The clusters deployed in the different regions have the same logical name (a name visible to a user), so that it may be learned subsequently from the logical name that the clusters are data copies of one another. ③ A topic with the same name may be created among the plurality of clusters. When the topic is created, a primary region may be specified for a producer, to ensure that a message for the topic may be written only through the cluster deployed in the primary region. When a consumer is registered, a primary region may be specified for the consumer to ensure that the message written for the topic may be consumed only through the cluster deployed in the primary region. ④ When a container is created for a topic, a container corresponding to each region under the topic is created, so that suffixes of names of these containers are determined based on physical names of the clusters deployed in these regions, and the names of these containers further include a name (for example, Topic1) specified for the topic. ⑤ When a container is created for a topic, a unidirectional mirror service is also created between a same type of container (for example, containers having a same name) to synchronize data (such as a message and consumption information (for example, consumer offset)) between respective regions, without needing to handle a data loop problem.

It may be learned from the foregoing two paragraphs that in a possible implementation, each of the first message queue cluster and the second message queue cluster includes a plurality of containers created through configuration of a same topic, the plurality of containers include a first container and a second container, and the topic is used to indicate a message category stored in the plurality of containers; and the dedicated data synchronization service configured between the first container in the first message queue cluster and the first container in the second message queue cluster is used to unidirectionally synchronize, to the second message queue cluster, a message received and stored by the first message queue from the business service; and the dedicated data synchronization service configured between the second container in the first message queue cluster and the second container in the second message queue cluster is used to unidirectionally synchronize, to the first message queue cluster, a message received and stored by the second message queue from the business service.

It may be learned that for cluster 1, cluster 2, and cluster 3 (the three clusters shown in Fig. 3) involved in the disaster recovery solution across regions, when cluster 1, cluster 2, and cluster 3 are all configured with the same topic (Topic1 shown in Fig. 3), and each of cluster 1, cluster 2, and cluster 3 includes a plurality of containers created for the topic, if the plurality of containers include container 1 (Topic1_global_region1 shown in Fig. 3), container 2 (Topic1_global_region2 shown in Fig. 3), and container 3 (Topic1_global_region3 shown in Fig. 3), a unidirectional dedicated data synchronization service is configured between container 1 in cluster 1 and container 1 in cluster 2, a unidirectional dedicated data synchronization service is configured between container 2 in cluster 1 and container 2 in cluster 2, and a unidirectional dedicated data synchronization service is configured between container 3 in cluster 1 and container 3 in cluster 2, the solution may include: storing, in container 1 in cluster 1, message 1 generated by the business service corresponding to cluster 1, and synchronizing, by container 1 in cluster 1, message 1 and offset 1 corresponding to message 1 to container 1 in cluster 2 and container 1 in cluster 3 for backup; similarly, storing, in container 2 in cluster 2, message 2 generated by the business service corresponding to cluster 2, and synchronizing, by container 2 in cluster 2, message 2 and offset 2 corresponding to message 2 to container 2 in cluster 1 and container 2 in cluster 3 for backup; and similarly, storing, in container 3 in cluster 3, message 3 generated by the business service corresponding to cluster 3, and synchronizing, by container 3 in cluster 3, message 3 and offset 3 corresponding to message 3 to container 3 in cluster 1 and container 3 in cluster 2 for backup.

It may be learned from the foregoing four paragraphs that the disaster recovery solution across regions provided in the present application that may better meet the requirement for specified offset writing has the following features: the solution involves logical clusters deployed in N regions; message queue clusters deployed in the N regions are all configured with the same topic (Topic1 shown in Fig. 3); and for an ith region (region 1 shown in Fig. 3), a message queue cluster deployed in the ith region includes not only a container (Topic1_global_region1 shown in Fig. 3) corresponding to the ith region under the topic, but also containers (Topic1_global_region2 and Topic1_global_region3 shown in Fig. 3) corresponding to the other regions under the topic, so that the message queue cluster deployed in the ith region may include containers corresponding to the N regions under the topic, thereby enabling the message queue cluster deployed in the ith region to record not only a message generated by the business service corresponding to the region, but also messages generated by the business services corresponding to the other regions, and thus enabling the message queue cluster deployed in the ith region to completely reproduce a data view in the message queue cluster deployed in each region.

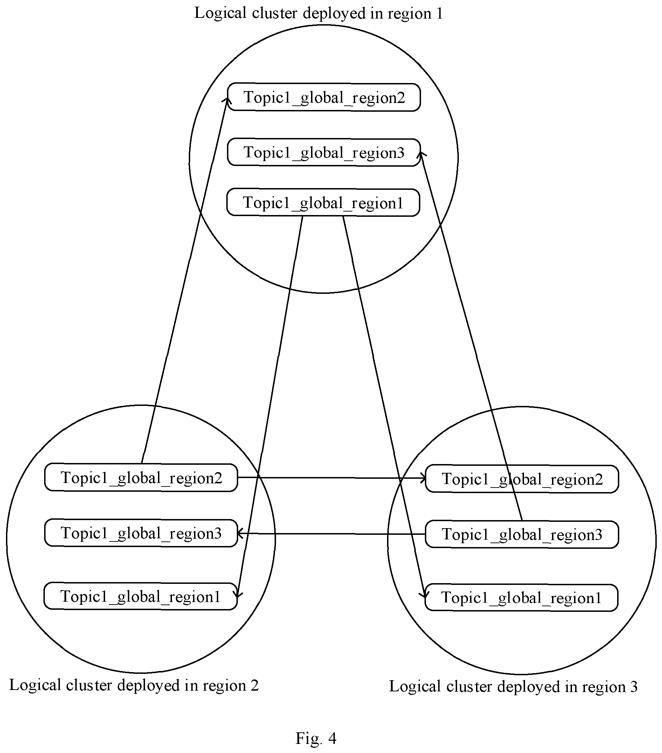

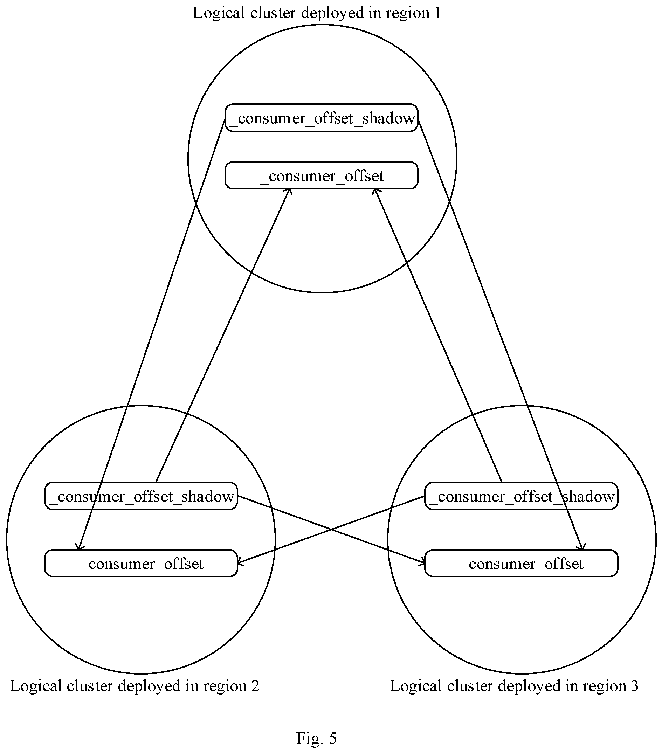

It may be learned that the disaster recovery solution across regions shown in the foregoing paragraph allows message production services to be separately deployed in different regions, and data is simultaneously written into topics in the respective regions. In addition, data in a local region is asynchronously replicated by a mirror service to clusters deployed in other regions, while ensuring that offsets of the data are consistent in the different regions. In this way, in each region, there is not only a topic in the region, but also topic backup data in the other regions. In addition, for a producer in each region, a message sent by the producer may be written only into a topic (for example, a container whose suffix is a physical name of the cluster deployed in the region) in the region, and cannot be written into topics in the other regions. However, for a consumer in each region, the consumer may consume (for example, subscribe to) not only a message stored in the topic in the region, but also messages stored in the topics in the other regions. In addition, partitions presented by a container with the same suffix (the containers having the same name shown in Fig. 3) in each region must be consistent, to ensure that data of a source topic and data of a target topic may be aligned during data synchronization. In addition, a unidirectional mirror service (the unidirectional synchronization service shown in Fig. 4 and Fig. 5) needs to be created between the same type of topic deployed in different regions, without needing to handle a data loop problem. It should be noted that for a plurality of regions configured with the same topic, as the quantity of regions in the plurality of regions increases, the quantity of containers that need to be created in the cluster deployed in each region when the topic is configured also increases.

In addition, to better implement specified offset writing, the present application further provides a specified offset writing solution, and the solution meets constraints shown in the following (1) and (2).
(1) For a sending end of a synchronous message, an offset corresponding to the message is written into an attribute of the message based on a type of a message queue that stores the message in the sending end, so that the offset may be provided to other clusters as an attribute. For example, Kafka provides a mechanism for delivering metadata between a producer and a consumer, which is referred to as a Kafka header. Therefore, the offset may be written into the attribute by setting specific metadata (for example, GLOBAL_MQ_WRITE_OFFSET = 10000) in the Kafka header. For another example, in RocketMQ, the offset may be written into the attribute by setting the same content in a properties attribute.

It may be learned from the foregoing paragraph that in a possible implementation, the foregoing step "writing the first storage offset configured for the first message in the first message" may include: writing the first storage offset configured for the first message in a message header (for example, a Kafka header) of the first message; or writing the first storage offset configured for the first message in an attribute feature (for example, a properties attribute) of the first message, to better adapt to the specified offset writing solution in different scenarios.

(2) For a receiving end of the synchronous message, the receiving end needs to read the attribute that carries the offset, and when writing the message into disk data, sets an offset of the message to an attribute value of the attribute, to ensure that the offset corresponding to the message in the receiving end is consistent with the offset corresponding to the message in the sending end. For example, when the receiving end is implemented in Kafka, an increasing offset generated by the receiving end is no longer used when the message is written, and an offset in write request metadata received by the receiving end is preferentially used, so that when it is determined that an offset of a current storage system is less than the offset in the write request, the write is supported. For another example, when the receiving end is implemented in RocketMQ, a queue offset attribute of the message is set to the offset in the write request when a commit log is written, and when a consume queue index is generated, a blank offset between a previous offset and a current offset is padded with 0.

It should be noted that in any message queue system, offsets are continuous and increasing. However, in the solution implemented by specified offset writing, it only needs to be ensured that written offsets are increasing, and it does not need to be ensured that the written offsets are continuous, to prevent some unexpected failure scenarios. In addition, if the offset specified by the sending end is less than or equal to a current maximum offset of the receiving end, it may be determined that a current write request is a request re-sent due to a problem (such as a restart or a failure) with the mirror service, and thus it may be determined that the write request does not need to be processed, and the request may be directly rejected.

It may be learned from the foregoing two paragraphs that the process of storing the first message in the second message queue cluster includes: after obtaining the first storage offset of the first message, determining, by the second message queue cluster, whether the first storage offset is greater than a largest storage offset in the second message queue cluster; and if yes, storing the first message in the second message queue cluster according to the first storage offset; or if no, discarding the first message. This may effectively overcome an impact caused by a problem with the dedicated data synchronization service.

It is found through research that for a message queue cluster (the logical cluster deployed in region 1 shown in Fig. 3), a consumer may not only subscribe to, through the cluster, a message recorded by the cluster (for example, a message stored in Topic1_global_region1 shown in Fig. 3), but also subscribe to a message synchronized from another region (for example, a message stored in Topic1_global_region2 shown in Fig. 3), so that the consumer may consume, with the cluster, messages generated for different regions, without an increase in bandwidth costs across the regions. It may be learned that in a possible implementation, a message consumption request is responded to through the first message queue cluster deployed in the first region, where the first message queue cluster supports consumption of a message generated by the service corresponding to each region.

For example, for an ith cluster in a plurality of message queue clusters configured with the same topic, the ith cluster may include a plurality of containers created for the topic, the plurality of containers include a container corresponding to a region to which each cluster belongs under the topic, and a working principle of the ith cluster may include: first, receiving a message subscription request triggered by a consumer for the topic, so that the request is used to indicate a container in which the consumer expects to consume a message stored under the topic; then, parsing a container identification (a container name "Topic1_global_region2" shown in Fig. 3) from the request, so that the container identification may represent a container specified by the consumer for consumption; and then pushing a message in the container indicated by the container identification to the consumer, so that a consumer in the region may not only consume, through the ith cluster, a message generated by the business service corresponding to the ith cluster, but also consume, through the ith cluster, a message backed up by the ith cluster, that is, a message generated by a business service corresponding to a message queue cluster deployed in another region. This enables the consumer to consume, with the same cluster, messages generated by the services corresponding to the different regions, so that when the cluster deployed in a single region fails, a switch may be directly made to a cluster deployed in another region to provide a service, without performing another extra operation (such as offset mapping), which is favorable for improving efficiency.

In addition, to better improve the message experience, for topics with the same name in different regions, it may be specified to consume, from a message queue cluster deployed in any one of the regions, a message stored in the topic. It may be learned based on this that in a possible implementation, the message processing method based on a message queue system provided in the present application may include: receiving a message consumption request for a specified topic, where the message consumption request is used to request consumption of a message stored in a message queue cluster deployed in any one of a plurality of regions; and responding to the message consumption request through a specified message queue cluster, where topics with the same name in different regions support message consumption from the message queue cluster deployed in any one of the regions, and the topic is used to indicate a message category stored in the message queue cluster.

It is found through research that to improve better the disaster recovery effect across regions, the consumption progress of each cluster may be synchronized to another cluster, to ensure that each cluster may accurately learn of a consumption situation corresponding to each region.

Based on the foregoing research, the present application further provides an implementation of the message processing method based on a message queue system. The implementation may include at least some or all of the following steps 21 to 23.

Step 21: obtaining first consumption information generated via a first message queue cluster, where the first consumption information is used to indicate a message consumed via the first message queue cluster.

The first consumption information is generated when a consumer consumes a message through the first message queue cluster, so that the first consumption information may indicate what message (for example, a message corresponding to which offset) the consumer consumes via the first message queue cluster.

In addition, the present application does not limit an implementation of the first consumption information. For example, the first consumption information may include an offset corresponding to the consumed message, so that the first consumption information may indicate a location at which the consumer consumes the message via the first message queue cluster.

Step 22: synchronizing the first consumption information to the second message queue cluster, where the second message queue cluster is configured to store the first consumption information.

Step 23: storing, in the first message queue cluster, second consumption information synchronized via the second message queue cluster, where the second consumption information is used to indicate a message consumed via the second message queue cluster.

The second consumption information is generated when a consumer consumes a message through the second message queue cluster, so that the second consumption information may indicate what message (for example, a message corresponding to which offset) the consumer consumes via the second message queue cluster.

In addition, the present application does not limit an implementation of the second consumption information. For example, the second consumption information may include an offset corresponding to the consumed message, so that the second consumption information may indicate a location at which the consumer consumes the message via the second message queue cluster.

In addition, the present application does not limit the execution time of step 23.

It may be learned from the foregoing content of steps 21 to 23 that for an ith cluster (for example, the first message queue cluster or the second message queue cluster) in a plurality of message queue clusters configured with the same topic, a working principle of the ith cluster may include: after sending, to a consumer subscribed to a container, a message stored in the container under the topic, storing an offset corresponding to the message as consumption information, and synchronizing the consumption information to another cluster, so that each cluster stores the consumption information, and each cluster may learn of a consumption progress from the consumption information.

In addition, in some scenarios, to better improve the disaster recovery effect across regions, for an ith cluster (for example, the first message queue cluster or the second message queue cluster) in a plurality of clusters configured with the same topic, the ith cluster may further include a container (the _consumer_offset container shown in Fig. 3) that is created for the topic and that is used to record a consumption progress, so that the _consumer_offset container is used to store a consumption progress of a message in the container corresponding to the region to which each cluster belongs under the topic, thereby enabling a working principle of the ith cluster to include: after sending, to a consumer subscribed to a container, a message stored in the container under the topic, storing an offset corresponding to the message as consumption information in the _consumer_offset container, and synchronizing, by the _consumer_offset container, the consumption information to _consumer_offset containers in another cluster, so that each cluster stores the consumption information, and each cluster may learn of the consumption progress from the consumption information.

It is further found through research that in some scenarios, some consumers have the following consumption requirement: the consumption progress is recorded only in a local cluster, and cannot be synchronized to another region.

Based on the foregoing research, the present application further provides an implementation of the message processing method based on a message queue system. The implementation may include at least some or all of the following steps 31 to 33.

Step 31: obtaining and storing first consumption information generated via the first message queue cluster, where the first consumption information is used to indicate a message consumed via the first message queue cluster.

Step 32: if the first consumption information meets a preset synchronization condition, synchronizing the first consumption information to the second message queue cluster, where the second message queue cluster is configured to store the first consumption information.

The preset synchronization condition refers to a condition that needs to be met by the consumption information that needs to be synchronized to another cluster. For example, the condition may be specifically that the consumption information carries a preset synchronization identification. It should be noted that for consumption information, whether the information carries the synchronization identification is determined based on the consumption configuration information set when a consumer subscribes to a topic. The consumption configuration information is used to represent a consumption requirement of the consumer, for example, a requirement for synchronization.

Step 33: if second consumption information meets the preset synchronization condition, storing, in the first message queue cluster, the second consumption information synchronized via the second message queue cluster, where the second consumption information is used to indicate a message consumed via the second message queue cluster.

It may be learned from the foregoing content of steps 31 to 33 that for the ith cluster (for example, the first message queue cluster or the second message queue cluster) in the plurality of clusters configured with the same topic, the working principle of the ith cluster may include: after sending, to a consumer subscribed to a container, a message stored in the container under the topic, first storing an offset corresponding to the message as consumption information, and then determining whether the consumption information meets the preset synchronization condition; and if the condition is not met, not synchronizing the consumption information; or if the condition is met, synchronizing the consumption information to another cluster, so that each cluster stores the consumption information, and each cluster may learn of the consumption progress from the consumption information.

In addition, to better implement the solution shown in the foregoing paragraph, the present application provides a possible implementation of the plurality of containers. In this implementation, for an ith cluster (for example, the first message queue cluster or the second message queue cluster) in a plurality of clusters configured with the same topic, the ith cluster may include a plurality of containers created through the configuration of the topic (target topic). The plurality of containers include not only a container (for example, the first container and the second container) corresponding to a region to which each cluster belongs under the topic, but also a third container (the _consumer_offset container shown in Fig. 3) and a fourth container (the _consumer_offset_shadow container shown in Fig. 3). The third container is used to record not only consumption information generated with the ith cluster, but also consumption information synchronized from another cluster. The fourth container is used to record consumption information that is generated with the ith cluster and that needs to be synchronized to another cluster. For ease of understanding, the following describes two examples.

Example 1: When the disaster recovery solution across regions involves the first message queue cluster and the second message queue cluster, the first message queue cluster and the second message queue cluster are both configured with the same topic, each of the first message queue cluster and the second message queue cluster includes a plurality of containers created through configuration of the topic (target topic), the plurality of containers include at least the third container and the fourth container, and a dedicated data synchronization service is configured between the fourth container in the first message queue cluster and the third container in the second message queue cluster, a working principle of the system includes: first, obtaining, by the first message queue cluster, first consumption information generated via the first message queue cluster through the third container in the first message queue cluster, so that the first consumption information is used to describe a message consumed via the first message queue cluster; and then determining whether the first consumption information meets a preset synchronization condition (for example, whether the first consumption information carries a synchronization identification), so that when it is determined that the first consumption information meets the preset synchronization condition, the first consumption information is stored in both the third container in the first message queue cluster and the fourth container in the first message queue cluster by the first message queue cluster, and the first consumption information is synchronized, by the first message queue cluster, to the third container in the second message queue cluster through the fourth container in the first message queue cluster, so that the third container in the second message queue cluster is configured to store the first consumption information, thereby implementing synchronization of some consumption information generated in the first message queue cluster to another cluster, which is favorable for better meeting some consumption requirements.

It may be learned that in a possible implementation, the message processing method based on a message queue system provided in the present application may further include: first, obtaining first consumption information generated via the first message queue cluster, where the first consumption information is used to indicate a message consumed via the first message queue cluster; a third container and a fourth container are configured in the first message queue cluster, and the fourth container is configured as a shadow container of the third container, and is used to cache some messages updated in the third container; then, storing the first consumption information in the third container in the first message queue cluster; and if the first consumption information meets a preset synchronization condition, storing the first consumption information in the fourth container in the first message queue cluster, and synchronously storing, in the second message queue cluster, the first consumption information in the fourth container through the dedicated data synchronization service.

Example 2: When the disaster recovery solution across regions involves the first message queue cluster and the second message queue cluster, the first message queue cluster and the second message queue cluster are both configured with the same topic, each of the first message queue cluster and the second message queue cluster includes a plurality of containers created through configuration of the topic (target topic), the plurality of containers include at least the third container and the fourth container, and a dedicated data synchronization service is configured between the third container in the first message queue cluster and the fourth container in the second message queue cluster, a working principle of the system includes: first, obtaining, by the second message queue cluster, second consumption information generated via the second message queue cluster through the third container in the second message queue cluster, so that the second consumption information is used to describe a message consumed via the second message queue cluster; and then determining whether the second consumption information meets a preset synchronization condition (for example, whether the second consumption information carries a synchronization identification), so that when it is determined that the second consumption information meets the preset synchronization condition, the second consumption information is stored in both the third container in the second message queue cluster and the fourth container in the second message queue cluster by the second message queue cluster, and the second consumption information is synchronized, by the second message queue cluster, to the third container in the first message queue cluster through the fourth container in the second message queue cluster, so that the third container in the first message queue cluster stores the second consumption information, thereby implementing synchronization of some consumption information generated in the second message queue cluster to another cluster, which is favorable for better meeting some consumption requirements.

It may be learned that in a possible implementation, the message processing method based on a message queue system provided in the present application may further include: first, obtaining second consumption information generated via the second message queue cluster, where the second consumption information is used to indicate a message consumed via the second message queue cluster; a third container and a fourth container are configured in the second message queue cluster, and the fourth container is configured as a shadow container of the third container, and is used to cache some messages updated in the third container; then, storing the second consumption information in the third container in the second message queue cluster; and if the second consumption information meets a preset synchronization condition, storing the second consumption information in the fourth container in the second message queue cluster, and synchronously storing, in the first message queue cluster, the second consumption information in the fourth container through the dedicated data synchronization service.

It should be noted that for a cluster deployed in any region, it is necessary to not only create, in the cluster, a container corresponding to each region under the same topic, to implement data backup between different regions in the specified offset manner, but also create a __consumer_offset container and a __consumer_offset_shadow topic container in the cluster, and ensure that the number of partitions of the two containers is consistent.

It may be learned from the foregoing content of the disaster recovery system across regions that the system has the advantages shown in the following (1) to (6).
(1) The present application provides a solution of specifying an offset for writing in a message queue, and adapts and modifies message queues such as RocketMQ and Kafka involved in an actual application scenario, to better meet the requirement for specified offset writing. This may implement that for a same message in different clusters, information such as a partition and an offset may be ensured to be completely consistent.
(2) The offset-specified writing solution provided in the present application further uses the manner of asynchronous replication across regions to provide a unified and consistent perspective of a data replica across regions, thereby ensuring that the cluster deployed in each region may see a complete and consistent data view with consistent offsets. In addition, when a plurality of regions are all configured with the same topic (Topic1 shown in Fig. 3), masterless multi-write may be implemented by using a plurality of containers created for the topic in each region, to ensure that production services in each region may simultaneously write to the topic, without special processing.
(3) Based on the offset synchronization mechanism provided in the present application, the consumption situation of each cluster may be synchronized to another cluster, to facilitate lossless switching between a plurality of clusters. This enables a quick switch to a cluster deployed in another region to continue providing a service when the cluster deployed in a single region fails, to ensure that data viewed with these clusters is consistent.
(4) Data stored in containers with the same name in different regions is completely the same, so that a consumer may specify, with a cluster deployed in any one of the regions, consumption of a message stored in any one of the containers, which is favorable for improving the consumption experience.
(5) The cluster deployed in the same region includes a plurality of containers that are created for the same topic and that are respectively used to store messages generated by different regions, so that the cluster may provide the messages generated by the respective regions to the consumer, thereby enabling a plurality of different consumption tasks to be started through the cluster, without an increase in bandwidth costs across the regions.
(6) The disaster recovery system across regions provided in the present application supports simultaneous writing and simultaneous consumption of data in a plurality of regions. It may be learned that the cluster deployed in each region may simultaneously write messages sent for the same topic, and a consumer may consume full data with the cluster deployed in each region.

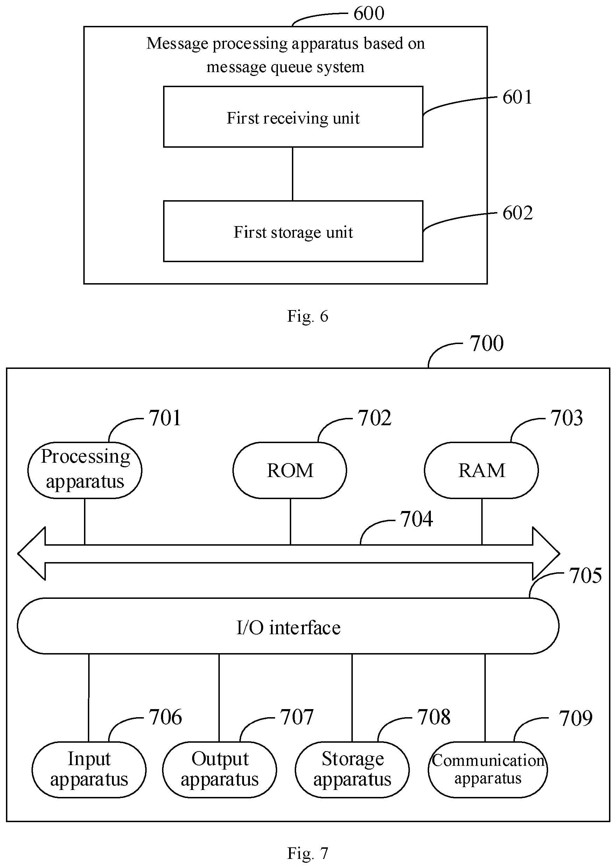

Based on the content of the message processing method based on a message queue system provided in the embodiments of the present application, an embodiment of the present application further provides a message processing apparatus based on a message queue system. The following describes and illustrates the apparatus with reference to Fig. 6. Fig. 6 is a schematic diagram of a structure of a message processing apparatus based on a message queue system according to an embodiment of the present application. It should be noted that for technical details of the message processing apparatus based on a message queue system provided in this embodiment of the present application, reference may be made to the foregoing content of the message processing method based on a message queue system.

As shown in Fig. 6, the message processing apparatus 600 based on a message queue system provided in this embodiment of the present application includes:
a first receiving unit 601, configured to receive a first message generated in a business service, and write, in the first message, a first storage offset configured for the first message, where a storage offset in a first message queue increases with message storage; and
a first storage unit 602, configured to store, in a first message queue cluster, the first message that carries the first storage offset, and synchronously store, in a second message queue cluster, the first message in the first message queue cluster through a dedicated data synchronization service, where the second message queue cluster is configured to store the first message according to the first storage offset, and the second message queue cluster supports message backup of the first message queue cluster.

In a possible implementation, the first message queue cluster and the second message queue cluster are deployed across regions, and the dedicated data synchronization service is preconfigured between the first message queue cluster and the second message queue cluster, and the dedicated data synchronization service is used to unidirectionally send the first message in the first message queue cluster to the second message queue cluster.

In a possible implementation, each of the first message queue cluster and the second message queue cluster includes a plurality of containers created through configuration of a same topic, the plurality of containers include a first container and a second container, and the topic is used to indicate a message category stored in the plurality of containers; and the dedicated data synchronization service configured between the first container in the first message queue cluster and the first container in the second message queue cluster is used to unidirectionally synchronize, to the second message queue cluster, a message received and stored by the first message queue from the business service; and the dedicated data synchronization service configured between the second container in the first message queue cluster and the second container in the second message queue cluster is used to unidirectionally synchronize, to the first message queue cluster, a message received and stored by the second message queue from the business service.

In a possible implementation, the first receiving unit 601 is further configured to: write, in a message header of the first message, the first storage offset configured for the first message; or write, in an attribute feature of the first message, the first message offset configured for the first message.

In a possible implementation, the apparatus 600 further includes: a first processing unit, configured to: after obtaining the first storage offset of the first message, determine, by the second message queue cluster, whether the first storage offset is greater than a largest storage offset in the second message queue cluster; in response to the first storage offset being greater than the largest storage offset, store, in the second message queue cluster, the first message according to the first storage offset; in response to the first storage offset being less than or equal to the largest storage offset, discard the first message.

In a possible implementation, the first receiving unit 601 is further configured to: receive the first message generated in the business service corresponding to the first message queue cluster; and
the apparatus 600 further includes:
a second receiving unit, configured to receive a second message generated in a business service corresponding to the second message queue cluster, and write, in the second message, a second storage offset configured for the second message, where a storage offset in a second message queue increases with message storage; and
a second storage unit, configured to store, in the second message queue cluster, the second message that carries the second storage offset, and synchronously store, in the first message queue cluster, the second message in the second message queue cluster through the dedicated data synchronization service, where the first message queue cluster supports message backup of the second message queue cluster.

In a possible implementation, the apparatus 600 further includes:
a first obtaining unit, configured to obtain first consumption information generated via the first message queue cluster, where the first consumption information is used to indicate a message consumed via the first message queue cluster; a third container and a fourth container are configured in the first message queue cluster, and the fourth container is configured as a shadow container of the third container, and is used to cache a portion of messages updated in the third container;
a third storage unit, configured to store the first consumption information in the third container in the first message queue cluster; and
a fourth storage unit, configured to: in response to the first consumption information meeting a preset synchronization condition, store the first consumption information in the fourth container in the first message queue cluster, and synchronously store, in the second message queue cluster, the first consumption information in the fourth container through the dedicated data synchronization service.

In a possible implementation, the apparatus 600 further includes:
a second processing unit, configured to respond to a message consumption request through the first message queue cluster deployed in a first region, where the first message queue cluster supports consumption of a message generated by the business service corresponding to each region.

In a possible implementation, the apparatus 600 further includes:
a third processing unit, configured to receive a message consumption request for a specified topic, where the message consumption request is used to request consumption of a message stored in a message queue cluster deployed in any one of a plurality of regions; and respond to the message consumption request through a specified message queue cluster, where topics with a same name in different regions support message consumption from the message queue cluster deployed in any one of the plurality of regions, and the topic is used to indicate a message category stored in the message queue cluster.

It may be learned from the foregoing content of the message processing apparatus 600 based on a message queue system that a working principle of the apparatus 600 includes: first, receiving a first message generated in a service, and writing, in the first message, a first storage offset (such as offset) configured for the first message; and then, storing, in a first message queue cluster, the first message that carries the first storage offset, and synchronously storing, in a second message queue cluster, the first message in the first message queue cluster through a dedicated data synchronization service, so that the second message queue cluster is configured to store the first message according to the first storage offset, and the second message queue cluster supports message backup of the first message queue cluster. In this way, backup may be performed in a specified offset writing manner, to ensure that storage locations of the message in different clusters are consistent, thereby effectively overcoming a defect caused by inconsistency of offsets corresponding to a same message in different clusters, which is favorable for improving a disaster recovery effect across regions.

In addition, an embodiment of the present application further provides an electronic device. The device includes a processor and a memory, where the memory is configured to store an instruction or a computer program; and the processor is configured to execute the instruction or the computer program in the memory, to enable the electronic device to perform any one of the implementations of the message processing method based on a message queue system provided in the embodiments of the present application.

Fig. 7 is a schematic diagram of a structure of an electronic device 700 provided in an embodiment of the present application. The terminal device in this embodiment of the present application may include, but is not limited to, mobile terminals such as a mobile phone, a notebook computer, a digital broadcast receiver, a personal digital assistant (PDA), a tablet computer (PAD), a portable multimedia player (PMP), and a vehicle-mounted terminal (for example, a vehicle navigation terminal), and fixed terminals such as a digital TV and a desktop computer. The electronic device shown in Fig. 7 is merely an example, and shall not impose any limitation on the function and scope of use of the embodiments of the present application.

As shown in Fig. 7, the electronic device 700 may include a processing apparatus (such as a central processing unit and a graphics processor) 701, which may perform various appropriate actions and processing according to a program stored in a read-only memory (ROM) 702 or a program loaded from a storage apparatus 708 into a random access memory (RAM) 703. The RAM 703 further stores various programs and data required for operations of the electronic device 700. The processing apparatus 701, the ROM 702, and the RAM 703 are interconnected by means of a bus 704. An input/output (I/O) interface 705 is also connected to the bus 704.

Usually, the following apparatuses may be connected to the I/O interface 705: an input apparatus 706 including, for example, a touch screen, a touchpad, a keyboard, a mouse, a camera, a microphone, an accelerometer, and a gyroscope; an output apparatus 707 including, for example, a liquid crystal display (LCD), a speaker, and a vibrator; the storage apparatus 708 including, for example, a magnetic tape and a hard disk; and a communication apparatus 709. The communication apparatus 709 may allow the electronic device 700 to be in wireless or wired communication with other devices to exchange data. Although Fig. 7 shows the electronic device 700 having various apparatuses, it should be understood that not all the apparatuses shown herein need to be implemented or provided. More or fewer apparatuses may be implemented or provided alternatively.

In particular, according to the embodiments of the present application, the process described above with reference to the flowchart may be implemented as a computer software program. For example, this embodiment of the present application includes a computer program product, which includes a computer program carried in a non-transitory computer-readable medium, and the computer program includes program code for performing the method shown in the flowchart. In such an embodiment, the computer program may be downloaded and installed from a network via the communication apparatus 709, or installed from the storage apparatus 708, or installed from the ROM 702. When the computer program is executed by the processing apparatus 701, the foregoing functions defined in the method in this embodiment of the present application are performed.

The electronic device provided in this embodiment of the present application belongs to the same inventive concept as the method provided in the foregoing embodiments. For technical details not described in detail in this embodiment, reference may be made to the foregoing embodiments. This embodiment has the same beneficial effects as the foregoing embodiments.

An embodiment of the present application further provides a computer-readable medium. The computer-readable medium stores an instruction or a computer program that, when running on a device, enables the device to perform any one of the implementations of the message processing method based on a message queue system provided in the embodiments of the present application.

It should be noted that the foregoing computer-readable medium in the present application may be a computer-readable signal medium, a computer-readable storage medium, or any combination thereof. The computer-readable storage medium may be, for example, but is not limited to, an electronic, magnetic, optical, electromagnetic, infrared, or semiconductor system, apparatus, or device, or any combination thereof. More specific examples of the computer-readable storage medium may include, but are not limited to, an electrical connection having one or more wires, a portable computer magnetic disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination thereof. In the present application, the computer-readable storage medium may be any tangible medium that includes or stores a program, and the program may be used by or used in combination with an instruction execution system, apparatus, or device. In the present application, the computer-readable signal medium may include a data signal propagated on a baseband or as a part of a carrier, and computer-readable program code is carried in the data signal. The data signal propagated in this way may be in a plurality of forms, and includes, but is not limited to, an electromagnetic signal, an optical signal, or any suitable combination thereof. The computer-readable signal medium may alternatively be any computer-readable medium other than the computer-readable storage medium, and the computer-readable signal medium may send, propagate, or transmit a program used by or in combination with an instruction execution system, apparatus, or device. The program code included in the computer-readable medium may be transmitted in any suitable medium, including but not limited to a wire, an optical cable, a radio frequency (RF), or any suitable combination thereof.

In some implementations, a client and a server may communicate using any currently known or future developed network protocol, such as the hypertext transfer protocol (HTTP), and may be interconnected with any form or medium of digital data communication (for example, a communication network). Examples of the communication network include a local area network ("LAN"), a wide area network ("WAN"), an internet (for example, the Internet), a peer-to-peer network (for example, an Ad-Hoc network), and any network currently known or to be developed in the future.

The foregoing computer-readable medium may be included in the foregoing electronic device or may exist alone without being assembled into the electronic device.

The foregoing computer-readable medium carries one or more programs that, when being executed by the electronic device, enable the electronic device to perform the foregoing method.

Computer program code for performing operations of the present application may be written in one or more programming languages or a combination thereof, where the programming languages include, but are not limited to, an object-oriented programming language, such as Java, Smalltalk, and C++, and further include conventional procedural programming languages, such as "C" language or similar programming languages. The program code may be completely executed on a computer of a user, partially executed on a computer of a user, executed as an independent software package, partially executed on a computer of a user and partially executed on a remote computer, or completely executed on a remote computer or server. In the case of involving the remote computer, the remote computer may be connected to the computer of the user through any kind of network, including a local area network (LAN) or a wide area network (WAN), or may be connected to an external computer (for example, connected through the Internet with the aid of an Internet service provider).

The flowcharts and block diagrams in the drawings illustrate the possibly implemented architectures, functions, and operations of the system, the method, and the computer program product according to various embodiments of the present application. In this regard, each block in the flowchart or block diagram may represent a module, program segment, or part of code, and the module, program segment, or part of code includes one or more executable instructions for implementing the specified logical functions. It should also be noted that, in some alternative implementations, the functions marked in the blocks may also occur in an order different from that marked in the drawings. For example, two blocks shown in succession may actually be performed substantially in parallel, or they may sometimes be performed in the reverse order, depending on the functions involved. It also should be noted that each block in the block diagram and/or the flowchart, and a combination of the blocks in the block diagram and/or the flowchart may be implemented in a special purpose hardware-based system that executes specified functions or operations, or may be implemented in a combination of special purpose hardware and computer instructions.

The units involved in the embodiments of the present application may be implemented by software, and may also be implemented by hardware. The name of a unit/module does not constitute a limitation on the unit itself under certain circumstances.

The functions described herein may be performed at least in part by one or more hardware logic components. For example, without limitation, exemplary types of the hardware logic components that may be used include: a field programmable gate array (FPGA), an application specific integrated circuit (ASIC), an application specific standard product (ASSP), a system on chip (SOC), a complex programmable logical device (CPLD), and the like.

In the context of the present application, a machine-readable medium may be a tangible medium that may include or store a program for use by or in combination with an instruction execution system, apparatus, or device. The machine-readable medium may be a machine-readable signal medium or a machine-readable storage medium. The machine-readable medium includes, but is not limited to, an electronic, magnetic, optical, electromagnetic, infrared, or semiconductor system, apparatus, or device, or any suitable combination thereof. More specific examples of the machine-readable storage medium include an electrical connection based on one or more wires, a portable computer magnetic disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination thereof.

It should be noted that the embodiments of this specification are described in a progressive manner. Each embodiment focuses on the difference from other embodiments. For the same and similar parts between the embodiments, reference may be made to each other. For the system or apparatus disclosed in the embodiments, because it corresponds to the method disclosed in the embodiments, the description is relatively simple. For related parts, reference may be made to the description of the method.

It should be understood that in the present application, "at least one item" means one or more, and "a plurality of" means two or more. "And/or" describes an association relationship between associated objects, and represents that three relationships may exist. For example, "A and/or B" may represent the following three cases: Only A exists, only B exists, and both A and B exist, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one of a, b, or c may represent: a, b, c, "a and b", "a and c", "b and c", or "a, b, and c", where a, b, and c may be singular or plural.

It should be further noted that in this specification, relational terms such as "first" and "second" are merely used to distinguish one entity or operation from another entity or operation, and do not necessarily require or imply any actual relationship or order between these entities or operations. Furthermore, the terms "include", "include", or any other variant thereof are intended to encompass non-exclusive inclusion, such that a process, method, object, or device that includes a list of elements includes not only those elements, but also other elements not explicitly listed or elements inherent to such a process, method, object, or device. Without further limitation, an element defined by the phrase "includes a" does not exclude the existence of other identical elements in the process, method, object, or device that includes the element.

The steps of the method or algorithm described in conjunction with the embodiments disclosed herein may be directly implemented by hardware, a software module executed by a processor, or a combination thereof. The software module may be placed in a random access memory (RAM), a memory, a read-only memory (ROM), an electrically programmable ROM, an electrically erasable programmable ROM, a register, a hard disk, a removable magnetic disk, a CD-ROM, or a storage medium of any other form known in the art.

The foregoing descriptions of the disclosed embodiments enable those skilled in the art to implement or use the present application. Various modifications to these embodiments will be readily apparent to those skilled in the art, and the generic principles defined herein may be implemented in other embodiments without departing from the spirit or scope of the present application. Therefore, the present application is not intended to be limited to the embodiments shown herein, but is to be accorded the widest scope consistent with the principles and novel features disclosed herein.

## Claims

1. A message processing method based on a message queue system, comprising:
(S1) receiving a first message generated in a business service, and writing, in the first message, a first storage offset configured for the first message, wherein a storage offset in a first message queue increases with message storage; and
(S2) storing, in a first message queue cluster, the first message that carries the first storage offset, and synchronously storing, in a second message queue cluster, the first message in the first message queue cluster through a dedicated data synchronization service, wherein the second message queue cluster is configured to store the first message according to the first storage offset, and the second message queue cluster supports message backup of the first message queue cluster.

2. The method of claim 1, wherein the first message queue cluster and the second message queue cluster are deployed across regions, and the dedicated data synchronization service is preconfigured between the first message queue cluster and the second message queue cluster, and the dedicated data synchronization service is used to unidirectionally send the first message in the first message queue cluster to the second message queue cluster.

3. The method of claim 1, wherein each of the first message queue cluster and the second message queue cluster comprises a plurality of containers created through configuration of a same topic, the plurality of containers comprise a first container and a second container, and the topic is used to indicate a message category stored in the plurality of containers;
a dedicated data synchronization service configured between the first container in the first message queue cluster and the first container in the second message queue cluster is used to unidirectionally synchronize, to the second message queue cluster, a message received and stored by the first message queue from the business service; and
a dedicated data synchronization service configured between the second container in the first message queue cluster and the second container in the second message queue cluster is used to unidirectionally synchronize, to the first message queue cluster, a message received and stored by the second message queue from the business service.

4. The method of any one of claims 1-3, wherein the writing, in the first message, a first storage offset configured for the first message, comprises:
writing, in a message header of the first message, the first storage offset configured for the first message; or
writing, in an attribute feature of the first message, the first message offset configured for the first message.

5. The method of any one of claims 1-4, further comprising:
after obtaining the first storage offset of the first message, determining, by the second message queue cluster, whether the first storage offset is greater than a largest storage offset in the second message queue cluster;
in response to the first storage offset being greater than the largest storage offset, storing, in the second message queue cluster, the first message according to the first storage offset;
in response to the first storage offset being less than or equal to the largest storage offset, discarding the first message.

6. The method of any one of claims 1-5, wherein the receiving a first message generated in a business service, comprises:
receiving the first message generated in the business service corresponding to the first message queue cluster; and
the method further comprises:
receiving a second message generated in a business service corresponding to the second message queue cluster, and writing, in the second message, a second storage offset configured for the second message, wherein a storage offset in a second message queue increases with message storage; and
storing, in the second message queue cluster, the second message that carries the second storage offset, and synchronously storing, in the first message queue cluster, the second message in the second message queue cluster through the dedicated data synchronization service, wherein the first message queue cluster supports message backup of the second message queue cluster.

7. The method of any one of claims 1-6, further comprising:
obtaining first consumption information generated via the first message queue cluster, wherein the first consumption information is used to indicate a message consumed via the first message queue cluster, wherein a third container and a fourth container are configured in the first message queue cluster, and the fourth container is configured as a shadow container of the third container, and is used to cache a portion of messages updated in the third container;
storing the first consumption information in the third container in the first message queue cluster; and
in response to the first consumption information meeting a preset synchronization condition, storing the first consumption information in the fourth container in the first message queue cluster, and synchronously storing, in the second message queue cluster, the first consumption information in the fourth container through the dedicated data synchronization service.

8. The method of any one of claims 1-7, further comprising:
responding to a message consumption request through the first message queue cluster deployed in a first region, wherein the first message queue cluster supports consumption of a message generated by a business service corresponding to each region.

9. The method of any one of claims 1-8, further comprising:
receiving a message consumption request for a specified topic, wherein the message consumption request is used to request consumption of a message stored in a message queue cluster deployed in any one of a plurality of regions; and
responding to the message consumption request through a specified message queue cluster, wherein topics with a same name in different regions support message consumption from the message queue cluster deployed in any one of the plurality of regions, and the topics are used to indicate a message category stored in the message queue cluster.

10. An electronic device (700), comprising: a processing apparatus (701) and a memory (708), wherein
the memory (708) is configured to store an instruction or a computer program; and
the processor apparatus (701) is configured to execute the instruction or the computer program in the memory, to enable the electronic device to perform the method of any of claims 1 to 9.

11. A computer-readable medium, wherein the computer-readable medium stores an instruction or a computer program that, when running on a device, enables the device to perform the method of any of claims 1 to 9.

12. A computer program product, comprising a computer program carried in a non-transitory computer-readable medium, wherein the computer program comprises program code for performing the method of any of claims 1 to 9.
